# EUROPEAN PATENT SPECIFICATION

(11) **EP 4 286 823 B1**
(45) Date of publication and mention of the grant of the patent: **08.04.2026**
(21) Application number: 21922962.2
(22) Date of filing: 10.02.2021
(51) Int. Cl.: G01M 11/02, G06T 3/18, G06T 7/80, G03B 37/06, G03B 43/00, H04N 17/00

(54) **RESOLUTION MEASUREMENT METHOD, RESOLUTION MEASUREMENT SYSTEM, AND PROGRAM**
VERFAHREN ZUR AUFLÖSUNGSMESSUNG, SYSTEM ZUR AUFLÖSUNGSMESSUNG UND PROGRAMM
PROCÉDÉ DE MESURE DE RÉSOLUTION, SYSTÈME DE MESURE DE RÉSOLUTION ET PROGRAMME

(30) Priority: 01.02.2021 JP 2021014283
(43) Date of publication of application: 06.12.2023
(73) Proprietor: Leader Electronics Corp., Yokohama-shi, Kanagawa 223-8505 (JP)
(72) Inventor: TODA, Kouichi, Yokohama-shi, Kanagawa 223-8505 (JP)
(74) Representative: Wächtershäuser & Hartz Patentanwaltspartnerschaft mbB
(86) International application number: PCT/JP2021/004940
(87) International publication number: WO 2022/162953

(56) References cited:
- WO-A1-2018/034181
- JP-A- 2010 281 626
- JP-A- H11 142 292
- JP-A- H11 142 292
- JP-B1- 6 539 812
- US-A1- 2012 057 053
- ZHONGWEI TANG ET AL: "High-precision camera distortion measurements with a "calibration harp"", JOURNAL OF THE OPTICAL SOCIETY OF AMERICA A, vol. 29, no. 10, 1 October 2012 (2012-10-01), pages 2134, XP055680959, ISSN: 1084-7529, DOI: 10.1364/JOSAA.29.002134
- WILLIAMS DON ET AL: "A pilot study of digital camera resolution metrology protocols proposed under ISO 12233, edition 2", IMAGE QUALITY AND SYSTEM PERFORMANCE V, vol. 6808, 27 January 2008 (2008-01-27), pages 680804, XP093208562, DOI: 10.1117/12.768204

## Description

### TECHNICAL FIELD

The present invention relates to a technique for measuring resolution of a camera.

### BACKGROUND ART

Prior-art methods for measuring resolution (MTF: Modulation Transfer Function) of digital cameras are classified into a slanted-edge method and a contrast method, mainly. The slanted-edge method is a measurement method that can be applied to various kinds of cameras, since the test pattern used in the slanted-edge method is small compared with that used in the contrast method so that the slanted-edge method can be applied to a camera such as a fish-eye camera having distortion aberration, and so on. However, due to application of image processing (edge enhancement processing), a phenomenon such that reproducibility is lowered, and a phenomenon such that the value of the limit resolution is better than the value obtained by visual evaluation have occurred.

On the other hand, problems such as those occurred in the slanted-edge method do not occur frequently in the contrast method. In MTF measurement in the contrast method, an image of a pattern comprising different frequencies having constant amplitude is captured, and brightness amplitude of each frequency in the captured image is measured to thereby obtain an MTF (for example, Patent Literature 1). The document JPH11142292A discloses how this is done in the presence of geometric distortion by the optical system.

### CITATION LIST

### PATENT LITERATURE

PTL 1: Japanese Patent Application Public Disclosure No. 2010-281626

### SUMMARY OF INVENTION

### TECHNICAL PROBLEM

However, in the contrast method, if a test pattern includes distortion, waveforms are changed and harmonics components are generated, and, further, frequency intervals are changed, so that accurate MTF measurement cannot be performed. That is, the contrast method is an MTF measurement method based on the condition that the test pattern does not include distortion. Accordingly, it is not possible to apply a prior-art contrast method to a camera such as a fish-eye camera which causes distortion in a photography field of view.

The present invention has been achieved in view of the above problems.

### SOLUTION TO PROBLEM

For solving the above problems, a resolution measurement method of a mode of the present invention is a resolution measurement method as defined in claim 1, that is performed by a computer device, for a camera

Further, a different mode of the present invention is a computer device as defined in claim 4 which performs the above resolution measurement method.

Further, a different mode of the present invention is a system as defined in claim 5, comprising a computer device which performs the above resolution measurement method, a camera which causes distortion in a photography field of view, and a display device, wherein: the display device displays the distorted test chart generated by the computer device; and the computer device performs the performing measurement of resolution by an image of the distorted test chart displayed by the display device being captured by the camera.

Further, a different mode of the present invention is a computer readable media as defined in claim 6, on which computer executable instructions are stored, wherein the computer executable instructions make a computer device perform the above resolution measurement method when the computer executable instructions are executed by the computer device.

### BRIEF DESCRIPTION OF DRAWINGS

Fig. 1 is a figure showing an example of an exterior appearance of a resolution measurement system according to an embodiment of the present invention.
Fig. 2 is a figure showing an example of a construction of a resolution measurement system according to an embodiment of the present invention.
Fig. 3 is a figure showing an example of a photography field of view of a camera.
Fig. 4 is a figure representing an example of correspondence relation between pixels of a checkerboard image and pixels of a distorted checkerboard image.
Fig. 5 is a figure showing an example of a data structure of a distortion map.
Fig. 6 is a figure showing an example of a white test chart image corresponding to a checkerboard image area in a captured image, and an example of a no-distortion image, which was drawn thereafter, of a test chart for measurement.
Fig. 7 is a figure showing an example of a distorted image of a test chart for measurement, wherein the distorted image is that generated by applying a back projection process to a no-distortion image of the test chart for measurement.
Fig. 8 is a figure showing an example of a distorted image of a step chart, wherein the distorted image is that generated by applying a back projection process to a no-distortion image of the step chart.
Fig. 9 is a figure showing an example of a photography field of view in the case when a distorted image of a test chart for measurement is captured by a camera.
Fig. 10 is a figure showing an example representing plural test charts for measurement which correspond to plural spatial frequencies.
Fig. 11 is a flow chart showing an example of processing in a computer device in a resolution measurement system according to an embodiment of the present invention.
Fig. 12 is a figure showing an example of a hardware construction of a computer device in a resolution measurement system according to an embodiment of the present invention.

### DESCRIPTION OF EMBODIMENTS

In the following description, embodiments of the present invention will be explained in detail with reference to the figures.

### (Construction of Resolution Measurement System)

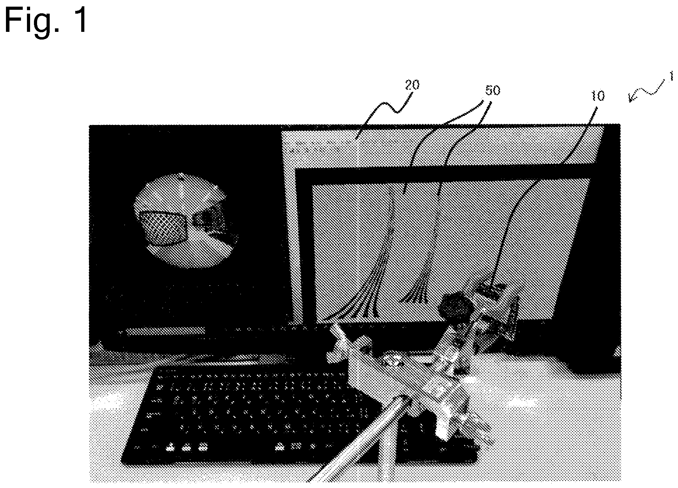

Fig. 1 shows an example of an exterior appearance of a resolution measurement system according to the present embodiment. The resolution measurement system 1 according to the present embodiment is a system for measuring resolution of a camera such as a fish-eye camera which causes distortion in the photography field of view thereof. The resolution measurement system 1 according to the present embodiment adopts a contrast method that is superior in reproducibility, and performs, with respect to a to-be-tested camera, distortion correction in relation to a test chart. As shown in Fig. 1, a camera 10, which is an object of resolution measurement, is positioned to capture, within its angle of view, an image of a test chart 50 displayed by a display 20. More specifically, the camera 10 and the display 20 are arranged in such a manner that the test chart includes an arbitrarily selected area, whereat resolution will be measured, in the angle of view of the camera 10.

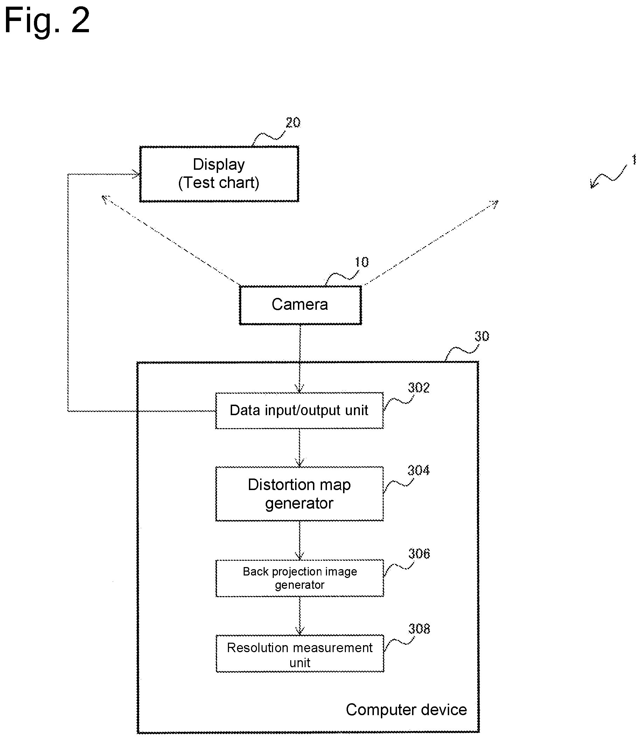

Fig. 2 is a figure showing an example of a construction of a resolution measurement system according to an embodiment of the present invention. As shown in Fig. 2, the resolution measurement system 1 comprises a camera 10, a display 20, and a computer device 30. The camera 10 is a to-be-tested camera which is an object of measurement of resolution, and is that such as a fish-eye camera which causes distortion in the photography field of view. In this regard, the arrows with dashed lines extending from the camera 10 together show an example of the range of the angle of view of the camera 10. The display 20 displays an image such as a test chart and so on, and the image is captured by the camera 10. The computer device 30 obtains data of the captured image from the camera 10, and uses the data together with image data of the test chart displayed in the display to perform a process for distortion correction with respect to the test chart. The position of the display 20 (the test chart) is not limited to a specific position. The test chart is required to be positioned in such a manner that an image of the test chart is captured in such a manner that the image includes an arbitrarily selected part, where the resolution will be measured, in the angle of view of the camera 10. In this regard, relative positions of the camera 10 and the display 20 are fixed to avoid changing of the relative positions, during measurement of resolution of the arbitrarily selected part.

The computer device 30 comprises a data input/output unit 302, a distortion map generator 304, a back projection image generator 306, and a resolution measurement unit 308.

The data input/output unit 302 performs processes for inputting/outputting various kinds of data in relation to the camera 10 and/or the display 20. For example, the data input/output unit 302 obtains data of an image, that is captured by the camera 10, from the camera 10 via a wired or wireless network. Further, the data input/output unit 302 may be constructed to obtain the captured-image data via an attachable/detachable removable memory. Further, the data input/output unit 302 outputs display data for displaying images, such as a test chart and so on, on the display 20.

The distortion map generator 304 generates a distortion map which represents correspondence relation between coordinates of all pixels of a first test chart (a checkerboard image 50 which will be explained later, or the like) and coordinates of all pixels of the first test chart in an image captured by the camera 10 which causes distortion in the photography field of view (a distorted checkerboard image 50d which will be explained later, or the like). Further, the first test chart is a grid-patterned image such as the checkerboard image 50 which will be explained later, or the like, for example. For example, the distortion map generator 304 calculates, from coordinates of respective lattice points of the checkerboard image 50 (the first test chart) that has been distorted in the image captured by the camera 10, coordinates of all pixels of the distorted first test chart in the captured image by performing an interpolation process such as cubic spline interpolation or the like.

The back projection image generator 306 generates, according to the correspondence relation represented by the distortion map generated by the distortion map generator 304, a distorted test chart (a distorted test chart 62d for measurement, which will be explained later, or the like) which is a distorted image of a second test chart (a no-distortion image 62 of a test chart for measurement, which will be explained later, or the like) that is used for measuring resolution in a specific area in the first test chart (in the image area) in the captured image. Regarding the generated distorted test chart, the image data thereof is outputted to the display 20, and outputted/displayed by the display 20. In a different construction, the image data of the generated distorted test chart may be outputted to a printer (which is not shown in the figures), and the image data may be outputted by printing it on a sheet of paper.

The resolution measurement unit 308 performs measurement of resolution, according to a contrast method, in a part of the photography field of view of the camera 10 corresponding to the above specific area, by using the distorted test chart generated by the back projection image generator 306. Further, when performing measurement of resolution, the distorted test chart generated by the back projection image generator 306 is outputted to the display 20. In this regard, in the present embodiment, since the distorted test chart generated by the back projection image generator 306 is captured as a distortion-corrected (no-distortion) image when it is captured by the camera 10, measurement according to the contrast method may be performed in a manner similar to that according to a prior-art contrast method.

Further, it may be constructed in such a manner that plural distorted test charts which are distorted images of plural second test charts corresponding to plural space frequencies are generated by the back projection image generator 306, and measurement of resolution is performed by using the plural distorted test charts by the resolution measurement unit 308.

### (Method for Generating Distortion Map)

In the following description, a tangible example of a method for generating a distortion map by the distortion map generator 304 will be explained in detail. In the present embodiment, for generating a distortion map, an image of a checkerboard displayed on the display 20 is captured, at an arbitrarily selected position within the angle of view of the camera 10 (an area including a part whereat the resolution will be measured). Thereafter, based on coordinate points in the captured checkerboard image that has been obtained, distortion of positions of all pixels in the checkerboard image is obtained by applying an interpolation process. In this regard, for example, although cubic spline interpolation can be cited as one of interpolation processes, the interpolation process is not limited thereto. A different interpolation method may be used. The data representing correspondence relation between the pixels of the original checkerboard image and the pixels of the captured and distorted checkerboard image is saved as a distortion map. Thereafter, based on the distortion map, a test chart for measurement is generated for making it possible to perform, even in the case of a camera 10 which causes distortion in the photography field of view, measurement of resolution according to the contrast method.

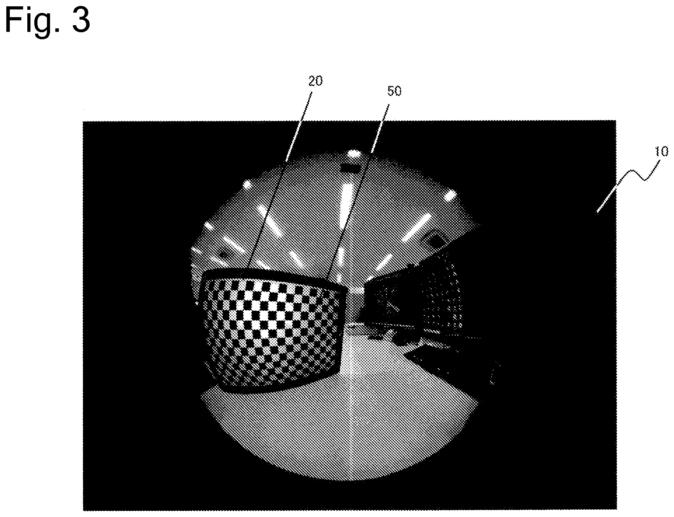

Fig. 3 is a figure showing an example of the photography field of view of the camera 10. As shown in Fig. 3, first, a checkerboard image 50, which is used as a test chart, is displayed on the display 20. The relative positions of the display 20 and the camera 10 are adjusted to capture an image of the checkerboard image 50 in such a manner that the captured checkerboard image 50 includes an area, whereat resolution will be measured, in the angle of view of the camera 10. Further, the data input/output unit 302 in the computer device 30 obtains, from the camera 10, data of an image such as that shown in Fig. 3 and captured by the camera 10.

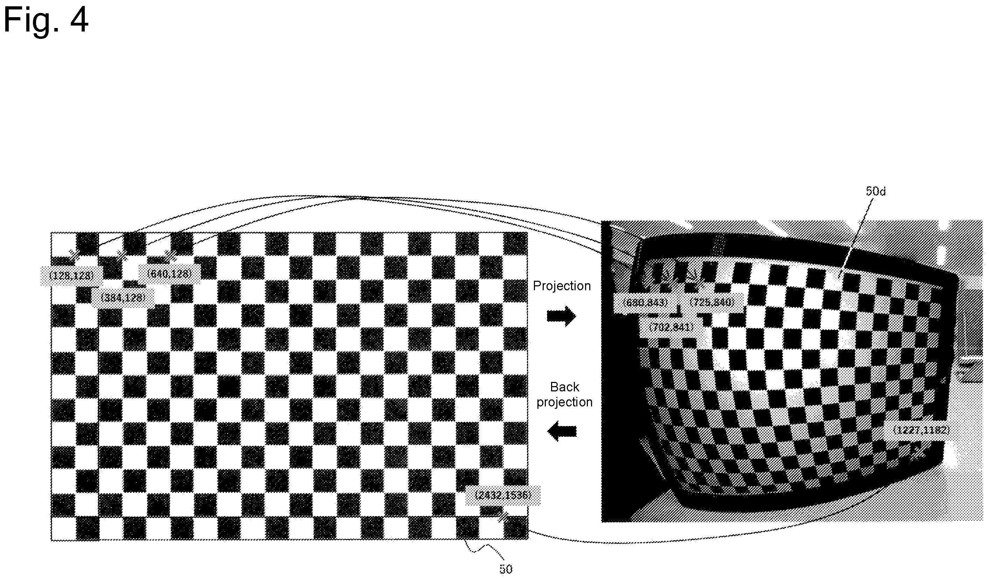

Next, Fig. 4 will be referred to, wherein Fig. 4 is a figure representing an example of correspondence relation between pixels of the checkerboard image 50 and pixels of a distorted checkerboard image 50d in a captured image obtained from the camera 10. In the example in Fig. 4, the checkerboard image 50 has a size of 2560 pixels x 1664 pixels.

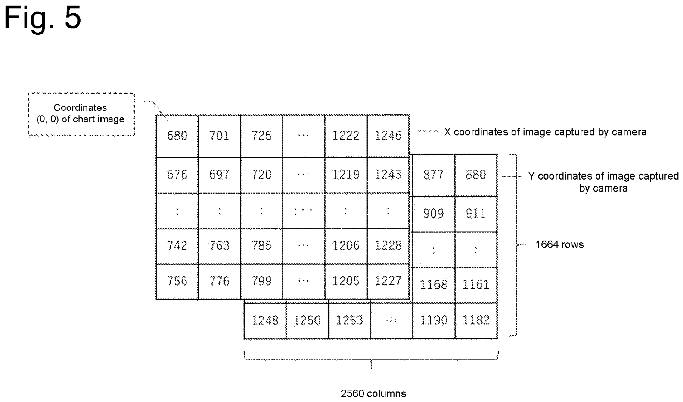

Fig. 5 is a figure showing an example of a data structure of a distortion map. As shown in Fig. 5, in the present embodiment, the distortion map data may be realized as a two-dimensional array that makes coordinates (x, y) of all pixels in the test chart 50 and coordinates (x, y) of all pixels in the distorted test chart 50d in the image captured by the camera 10 correspond with one another. In the present example (in this regard, the present example is a mere example, and the invention is not limited thereto), since the test chart (the checkerboard image) 50 has the size of 2560 pixels x 1664 pixels, the distortion map data may be represented as a two-dimensional array having the size of 2560 (pixels) x 1664 (pixels) x 2 (the X coordinate, the Y coordinate). More specifically, in the present example, respective coordinates of lattice points in the checkerboard are measured. Thereafter, the measured respective coordinates may be saved in the form of a matrix in relation to respective XY coordinates. The above processes may be performed by using existing software. For example, coordinates of respective lattice points in the checkerboard 50d in the image captured by the camera 10 may be obtained by using function "DetectCheckerboardPoints" in "MATLAB" (registered trademark) that is a product of MathWorks (registered trademark).

Thereafter, based on the obtained coordinates of the respective lattice points in the checkerboard image 50d, coordinates of all pixels of the checkerboard image 50d may be obtained by applying the interpolation process. The process may be realized, for example, by respectively applying, by using function "griddedInterpolant" in "MATLAB" that is a product of MathWorks, two-dimensional interpolation processes to X coordinates and Y coordinates of the checkerboard image 50d that correspond to all pixels of the checkerboard image 50, and saving the result thereof in a distortion map.

### (Method for Generating Back Projection Image)

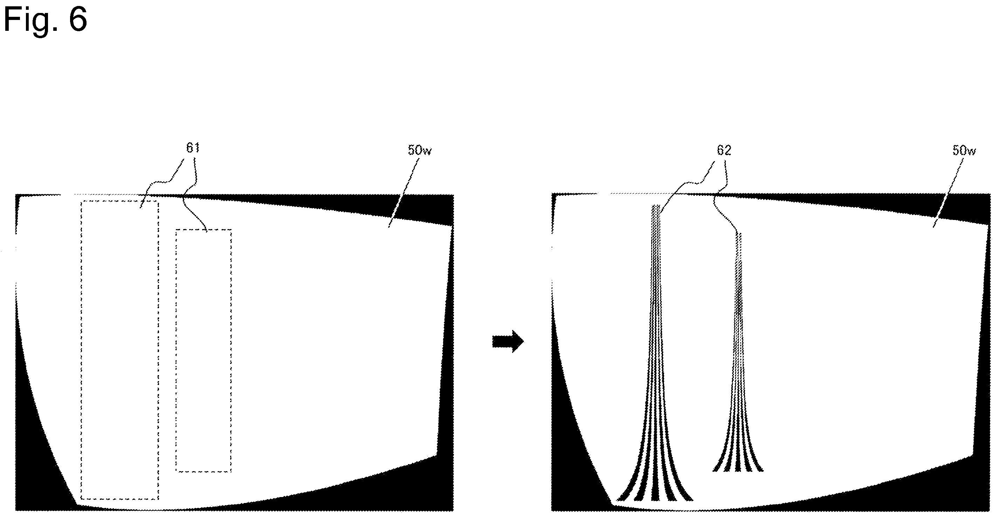

After the distortion map is generated by the distortion map generator 304, a back projection image of the test chart for measurement, which is used when performing resolution measurement, is generated next by the back projection image generator 306. Fig. 6 is a figure showing an example of a white test chart image 50w corresponding to a checkerboard image area in an image captured by a camera, and an example of a no-distortion image 62, which was created thereafter, of the test chart for measurement. More specifically, for example, in the white test chart image 50w which shows an image area of the distorted checkerboard image 50d, a user of the computer device 30 designates (draws) a rectangular 61, which shows a part whereat resolution is to be measured, by using an input device such as a mouse or the like. Thereafter, in the part designated by the rectangular 61, the no-distortion image 62 of the test chart for measurement is drawn.

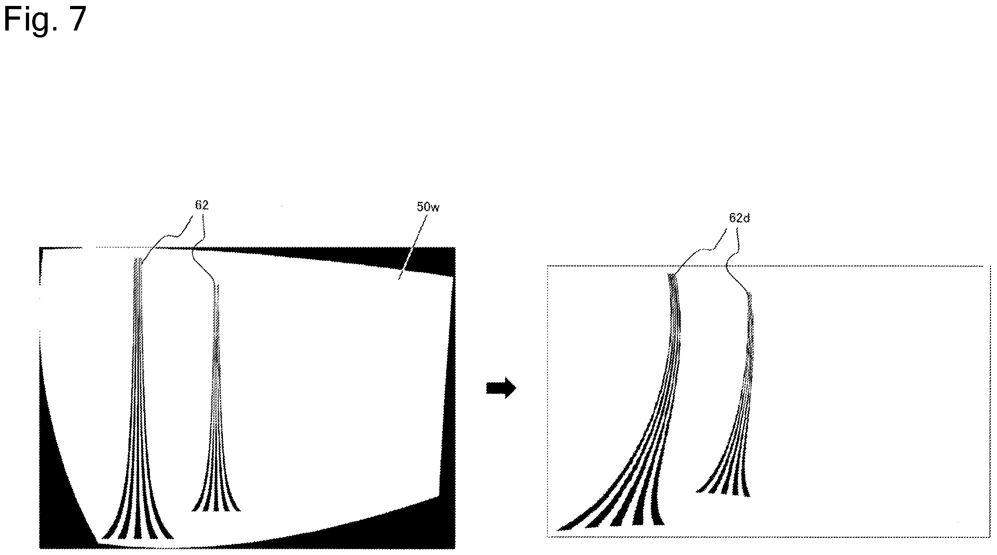

Next, based on the distortion map, a back projection process is applied to the no-distortion image 62 of the test chart for measurement, for generating a distorted test chart image for measurement. More specifically, according to correspondence between coordinates of all pixels in the no-distortion image 62 of the test chart for measurement and coordinates (x, y) of the checkerboard image 50 of the distortion map shown in Fig. 5, coordinates (x, y) of respective pixels of the no-distortion image 62 may be inversely converted and a distorted test chart image for measurement may be generated thereby. Fig. 7 is a figure showing an example of a distorted image 62d of a test chart for measurement, wherein the distorted image 62d is that generated by applying a back projection process to the no-distortion image 62 of the test chart for measurement.

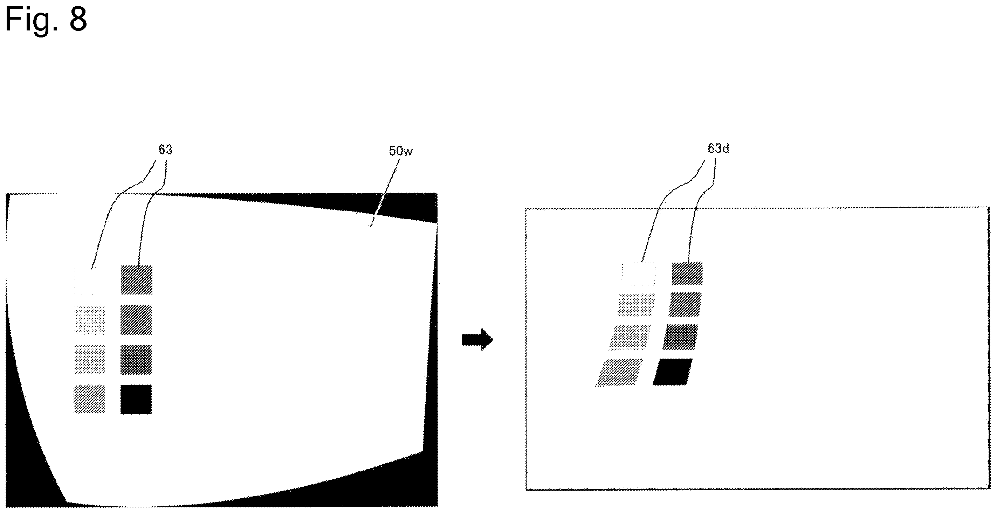

Further, in resolution measurement, since change in brightness is converted to frequency characteristics, it is necessary to ensure linearity of brightness data. However, since the brightness characteristic of a digital camera is not linear in general for various kinds of reasons, it is necessary to correct linearity of brightness data by using a test chart (this is referred to as "a step chart" herein) having brightness that has been known. Thus, similar to the case of the test chart for measurement, a back projection process is applied to the no-distortion image 63 of the step chart and a distorted step chart 63d such as that shown in Fig. 8 is generated thereby.

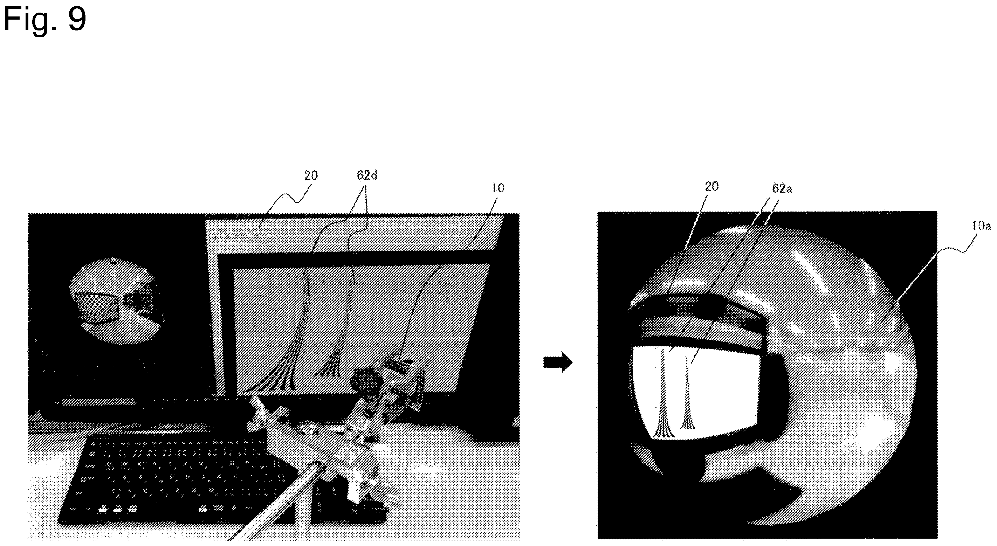

Further, Fig. 9 is a figure showing an example of a photography field of view 10a in the case when a distorted test chart image 62d for measurement, which has been generated as explained above, is displayed on the display 20 and an image of the distorted test chart image 62d for measurement is captured by the camera 10. In the photography field of view 10a, it can be seen that the distorted test chart image 62d for measurement is depicted as a no-distortion image like the no-distortion image 62 in Fig. 7. As a result, it becomes possible to perform, by using a contrast method, measurement of resolution at the part where the distorted test chart image 62d for measurement is depicted in the photography field of view of the camera 10. The measurement of resolution may be performed by performing the procedure of a prior-art contrast method. Also, resolution measurement can be performed similarly in a different part in the same white test chart image 50w. In this regard, with respect to the step chart that is explained in relation to Fig. 8 and is used for correcting linearity of brightness data, the step chart having no-distortion is depicted in the photography field of view 10a of the camera 10 in a manner similar to that relating to Fig. 9, i.e., by displaying the distorted step chart image 63d on the display 20 and taking an image of the step chart image 63d by the camera 10. Thereafter, when resolution measurement is performed, brightness data is corrected based on a brightness linearization LUT (Look-Up Table) generated based on the step chart images 63 and 63d.

Also, in the case that resolution measurement is to be performed in a part outside the area of the checkerboard image 50 in the photography field of view of the camera 10, measurement of resolution at plural parts in the photography field of view of the camera can be performed, by changing the relative positions of the display 20 (the test chart) and the camera 10 in such a manner that the checkerboard image includes the part whereat resolution measurement is to be performed and the whole checkerboard image 50 is covered by the photography field of view of the camera 10, and repeating the above-explained process including processes from the process for generating the distortion map to the process for generating the back projection image of the test chart for measurement.

It should be reminded that, although various kinds of test charts are displayed on the display 20 in the present invention, the construction is not limited thereto. For example, a test chart may be that printed on a sheet of paper. For example, in an environment such as outdoor space or the like where the brightness of a display is insufficient, it is effective to use a method wherein a test chart is printed on a sheet of paper, or the like. In any of the methods, the test chart (that is displayed on the display 20 or printed on a sheet of paper) may be arranged in such a manner that the test chart includes an arbitrarily selected part, whereat resolution is to be measured, in the angle of view of the camera 10. Further, it is necessary to fix, i.e., avoid changing of, relative positions of the camera 10 and the test chart during the period from the time when the distortion map is generated to the time when the distorted test chart 62d is generated and measurement of distortion is performed.

By generating the distortion map and generating the distorted test chart based on the distortion map as explained above, it becomes possible to perform resolution measurement in a specific part within the angle of view of the camera 10 by using a contrast method. Further, the only requirement in the resolution measurement method according to the present embodiment is that the relative positions of the camera 10 and the display 20 (the test charts 50, 50d, 62d, 62a) be unchanged during the period from the time of generation of the distortion map to the time of completion of resolution measurement; and the test distance between the camera 10 and the display 20 (the test charts 50, 50d, 62d, 62a) is not limited to a specific distance and positions of the camera 10 and the display 20 (the test charts 50, 50d, 62d, 62a) are not limited to specific positions (it is possible to change them every time when resolution measurement is performed). Further, based on correspondence relation between the coordinates of the pixels of the checkerboard 50 and the coordinates of the pixels of the distorted checkerboard 50d in the image captured by the camera, the distorted test chart image 62d is generated and resolution measurement using the contrast method is performed. Thus, even if a distortion characteristic formula of a camera is unknown, resolution measurement with respect to the camera can be performed.

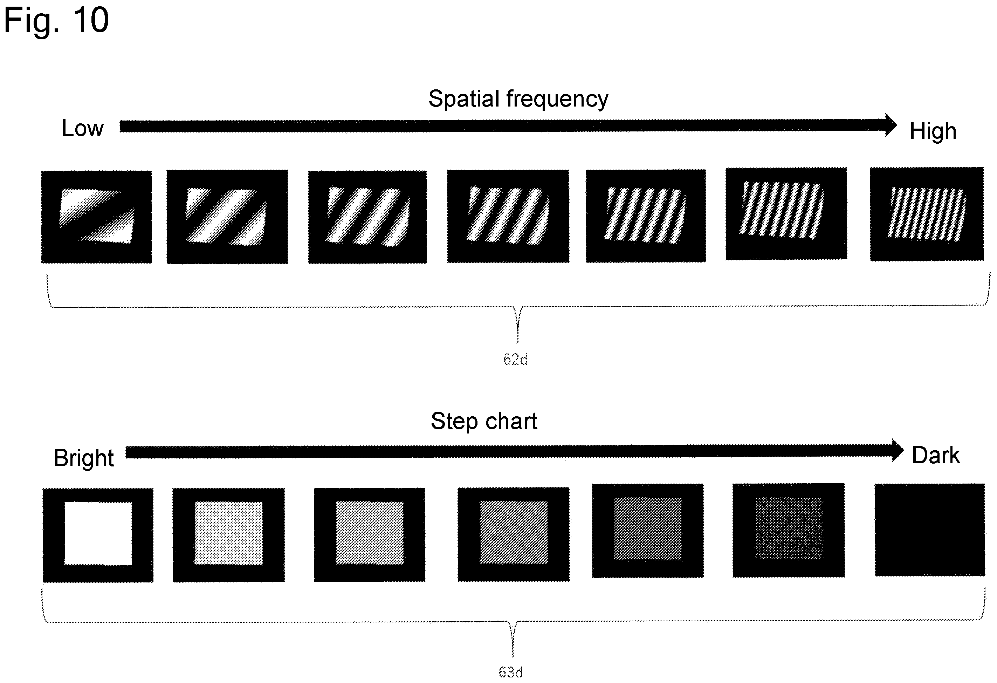

Generally, a relatively large test pattern, such as the test chart 62 which allows resolution measurement with respect to plural spatial frequencies, is used in a prior-art contrast method. Thus, in a prior-art contrast method, it is difficult to measure resolution in a narrow range in the angle of view of the camera 10. On the other hand, in the present embodiment, plural test charts (bar charts) 62d for measurement, which correspond to plural spatial frequencies, are created as shown in Fig. 10. With respect to the above test charts for measurement, distortion maps relating thereto are also generated as explained above, and distorted test charts 62d are generated based on the distortion maps. Thereafter, the plural distorted test charts 62d for measurement are displayed in a time division manner on the same part of the display 20 (the part corresponds to the position, whereat resolution measurement is to be performed, in the angle of view of the camera 10), and the camera 10 captures images thereof. Thus, in the captured images, the test charts 62d for measurement have been captured as no-distortion test charts for measurement, so that it becomes possible to perform resolution measurement with respect to plural spatial frequencies. By adopting the above-explained test charts 62d, the problem that it is difficult to measure resolution in a narrow range by using a prior-art contrast method can be solved.

### (Process Flow)

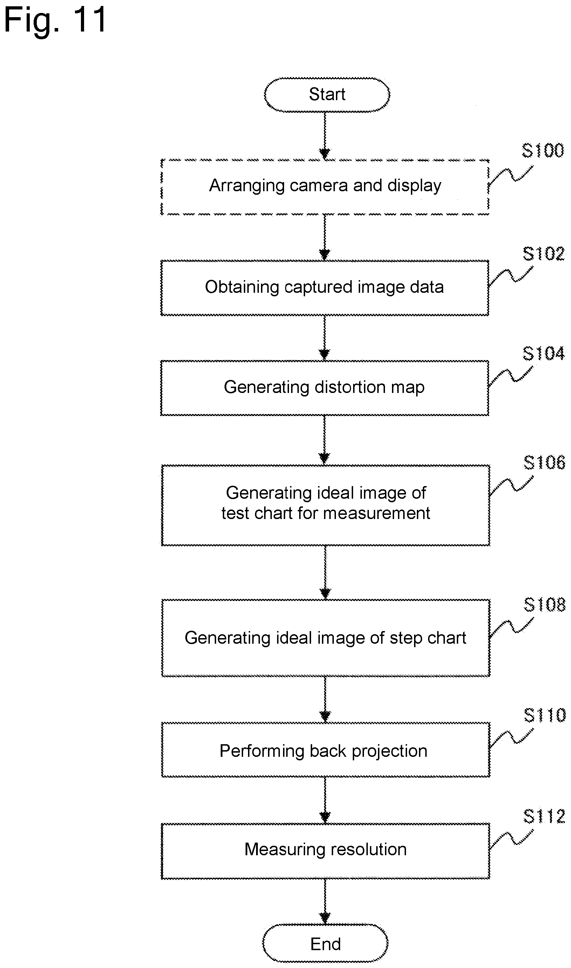

Fig. 11 is a flow chart showing an example of processing in the computer device 30 in the resolution measurement system 1 according to the present embodiment.

In step S100, action for arranging a camera 10 and a display 20 is performed. Relative positions of the camera 10 and the display 20 are fixed until the present processing flow is completed.

In step S102, with respect to a checkerboard image 50 displayed on the display 20, a data input/output unit 302 obtains data of an image of a distorted checkerboard image 50d captured by the camera 10.

In step S104, a distortion map generator 304 generates a distortion map by using the checkerboard image 50 and the captured-image data of the distorted checkerboard image 50d obtained in step S102.

In step S106, a back projection image generator 306 generates a no-distortion image 62 of a test chart for measurement, in a specific part (a rectangular 61) that is designated by a user by using a mouse or the like in a white test chart image 50w. Further, at that time, it may be possible to generate no-distortion images of plural test chart images for measurement such as those shown in Fig. 10. Further, in step S108, in a manner similar to the above manner, the back projection image generator 306 generates a no-distortion image 63 of a step chart for correcting linearity of brightness data. In this regard, the order to perform processes in steps S106 and S108 may be reversed, or the processes may be performed in a parallel manner.

In step S110, based on the distortion map, the back projection image generator 306 applies a back projection process to the no-distortion image 62 of the test chart for measurement to generate a distorted test chart image 62d for measurement. In this regard, at that time, it may be possible to generate plural test chart images 62d for measurement such as those shown in Fig. 10. Further, image data of the generated distorted test chart image 62d for measurement is outputted to the display 20. The display 20 obtains the image data and outputs/displays the image data. (In a different construction, the distorted test chart image 62d for measurement may be printed on a sheet of paper.) Similarly, the back projection image generator 306 also applies a back projection process to the no-distortion image 63 of the step chart to generate a distorted step chart 63d. Image data of the generated distorted step chart image 63d is outputted to the display 20.

In step S112, after capturing, by the camera 10, an image of the distorted test chart image 62d for measurement (which is displayed on the display 20 or printed on a sheet of paper), resolution measurement according to a contrast method using the no-distortion image 62a of the test chart for measurement is performed. Further, when performing resolution measurement, brightness data is corrected based on a brightness linearization LUT (Look-Up Table) that is generated according to the step chart images 63 and 63d. Further, at that time, by outputting plural test chart images 62d for measurement to be displayed on the display 20 in a time division manner, it may become possible to perform resolution measurement with respect to plural spatial frequencies.

In this regard, in the case that resolution measurement is performed at a different part in the image area of the distorted checkerboard image 50d captured by the camera 10, processes in steps S106-S110 are repeated.

Further, in the case that resolution measurement is to be performed at a part outside the image area of the distorted checkerboard image 50d, the process in step S100 is performed to make the part, whereat resolution measurement is to be performed, be included in the checkerboard image 50d. Thereafter, with respect to the part whereat resolution measurement is to be performed, the process of step S102 and the processes following thereto are performed.

It should be reminded that the resolution measurement method according to the present processing flow can also be realized as a computer program which makes a computer perform the method. Further, it is possible to record a computer program such as that explained above on a computer-readable recording medium.

### (Hardware Construction)

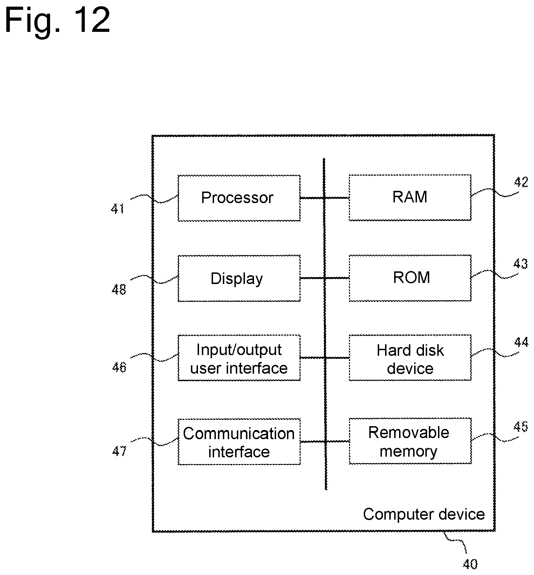

The construction of the above-explained computer device 30 can be realized by using a hardware construction similar to that of a general computer device. Fig. 12 is a figure showing an example of a hardware construction of the computer device 30. For example, a computer device 40 shown in Fig. 12 comprises: a processor 41; a RAM (Random Access memory) 42; a ROM (Read Only Memory) 43; a built-in hard disk device 44; removable memories 45 such as an external hard disk device, a CD, a DVD, a USB memory, a memory stick, an SD card, and so on; input/output interfaces 46 (a keyboard, a mouse, a touch panel, a speaker, a microphone, a lamp, and so on) for data communication between a user and the computer device 40; a wired/wireless communication interface 47 which can communicate with the camera 10, the display 20, and other devices; and a display 48 (this display can also be used to work as the display 20). The function of the computer device 30 according to the present embodiment can be realized by making the processor 41 read a program, which has been stored in advance in the hard disk device 44, the RAM 42, the removable memory 45, or the like, into a memory such as the RAM 42 or the like, and execute the program and read the above-explained data required in the process from the hard disk device 44, the ROM 43, the removable memory 45, or the like while executing the program. It should be reminded that the hardware construction shown in Fig. 12 is a mere example, so that the hardware construction is not limited thereto.

In the above description, embodiments of the present invention have been explained, and, in this regard, it is needless to state that the present invention is not limited to any of the above-explained embodiments, and can be implemented in any of various different modes within the scope of the claims.

### REFERENCE SIGNS LIST

- 1: Resolution measurement system

- 10: To-be-tested camera
- 20: Display (Test chart)
- 30: Computer device
- 302: Data input/output unit
- 304: Distortion map generator
- 306: Back projection image generator
- 308: Resolution measurement unit
- 40: Computer device
- 41: Processor
- 42: RAM
- 43: ROM
- 44: Hard disk device
- 45: Removable memory
- 46: Input/output user interface
- 47: Communication interface
- 48: Display

## Claims

1. A resolution measurement method, that is performed by a computer device (30), for a camera (10), comprising steps for:
capturing, by a camera (10) which causes distortion in a field of view, an image of a first test chart (50) in such a manner that it includes an arbitrarily selected part where resolution is to be measured;
generating, by interpolation, a distortion map which represents correspondence relation between coordinates of pixels of the first test chart (50) and coordinates of the pixels of the first test chart (50) in the captured image;
generating, according to the correspondence relation represented by the distortion map, a distorted test chart which is a distorted image of a second test chart that is used for measuring resolution, at a specific area in the first test chart (50) in the captured image; and
performing measurement of resolution, according to a contrast method at a part that corresponds to the specific area, in the field of view of the camera (10), wherein the relative positions of the camera (10) and the test chart (50) be unchanged during the period from the time of generation of the distortion map to the time of completion of resolution measurement, and wherein the distorted test chart is captured;
wherein
the first test chart (50) is a grid-patterned image;
in the step for generating the distortion map, coordinates of the pixels of the first test chart (50) in the captured image, except for coordinates of respective lattice points of the first test chart in the captured image, are calculated from the coordinates of the respective lattice points by performing interpolation;
in the step for generating the distorted test chart, a plural number of the distorted test charts, that are distorted images of a plural number of the second test charts corresponding to a plural number of spatial frequencies that are different each other, are generated; and
in the step for performing measurement of resolution, measurement of resolution is performed according to a contrast method and in a state that the plural distorted test charts for the plural number of spatial frequencies that are different each other are captured in a time division manner on the same part corresponding to the specific area, in the field of view of the camera (10).

2. The resolution measurement method as recited in Claim 1, wherein, in the step for generating the distorted test chart, the plural number of the second test charts with no distortion are drawn in an area corresponding to that of the first test chart (50) in the captured image, and the plural distorted test charts are generated according to the correspondence relation represented by the distortion map.

3. The resolution measurement method as recited in Claim 1, wherein, in the step for performing measurement of resolution, the plural distorted test charts are outputted to an external display device (20).

4. A computer device (30) which performs the resolution measurement method recited in any one of Claims 1-3, said computed device being adapted to be connected to a camera (10) causing distortion in a photography field of view, and positioned to capture, within its angle of view, an image of a test chart (50).

5. A system (1) comprising
- a computer device (30) as defined by claim 4,
- a camera (10) which causes distortion in a photography field of view, and
- a display device (20), wherein
the display device (20) displays the plural distorted test charts generated by the computer device (30), and
the computer device (30) performs the step for performing measurement of resolution by the plural distorted test charts displayed by the display device (20) being captured by the camera (10).

6. A computer readable media in which computer executable instructions are stored, wherein the computer executable instructions make a computer device (30) perform the resolution measurement method recited in any one of Claims 1-3 when the computer executable instructions are executed by the computer device (30) which is connected to a camera (10) causing distortion in a photography field of view, and positioned to capture, within its angle of view, an image of a test chart (50).

## Patentansprüche

1. Ein von einem Computer (30) durchgeführtes Verfahren zur Auflösungsmessung einer Kamera (10) umfasst folgende Schritte:
Erfassen eines Bildes einer ersten Testtafel (50) durch eine Kamera (10),
wobei im Sichtfeld Verzerrungen entstehen, sodass ein beliebig gewählter Bereich, in dem die Auflösung gemessen werden soll, enthalten ist;
Erzeugen einer Verzerrungskarte mittels Interpolation, die die Korrespondenzbeziehung zwischen den Pixelkoordinaten der ersten Testtafel (50) und den Pixelkoordinaten der ersten Testtafel (50) im erfassten Bild darstellt;
Erzeugen einer verzerrten Testtafel, die ein verzerrtes Bild einer zweiten Testtafel zur Auflösungsmessung in einem bestimmten Bereich der ersten Testtafel (50) im erfassten Bild darstellt, gemäß der durch die Verzerrungskarte dargestellten Korrespondenzbeziehung. und
Durchführung einer Auflösungsmessung nach einem Kontrastverfahren in einem dem spezifischen Bereich entsprechenden Teil des Sichtfelds der Kamera (10), wobei die relative Position der Kamera (10) und der Testtafel (50) während des Zeitraums von der Erzeugung der Verzerrungskarte bis zum Abschluss der Auflösungsmessung unverändert bleibt und die verzerrte Testtafel aufgenommen wird;
wobei
die erste Testtafel (50) ein gitterförmiges Bild ist;
im Schritt der Erzeugung der Verzerrungskarte werden die Koordinaten der Pixel der ersten Testtafel (50) im aufgenommenen Bild, mit Ausnahme der Koordinaten der jeweiligen Gitterpunkte der ersten Testtafel im aufgenommenen Bild, durch Interpolation aus den Koordinaten der jeweiligen Gitterpunkte berechnet;
im Schritt der Erzeugung der verzerrten Testtafel wird eine Vielzahl verzerrter Testtafeln erzeugt, die verzerrte Bilder einer Vielzahl zweiter Testtafeln darstellen, die einer Vielzahl unterschiedlicher Ortsfrequenzen entsprechen;
und
im Schritt der Auflösungsmessung wird die Auflösungsmessung nach einem Kontrastverfahren durchgeführt, wobei mehrere verzerrte Testtafeln für eine Vielzahl voneinander unterschiedlicher Ortsfrequenzen zeitlich auf demselben Teil des Sichtfelds der Kamera (10) erfasst werden, der dem jeweiligen Bereich entspricht.

2. Das Auflösungsmessverfahren nach Anspruch 1, wobei im Schritt zur Erzeugung der verzerrten Testtafel mehrere zweite, unverzerrte Testtafeln in einem Bereich gezeichnet werden, der dem Bereich der ersten Testtafel (50) im aufgenommenen Bild entspricht, und die verzerrten Testtafeln gemäß der durch die Verzerrungskarte dargestellten Korrespondenzbeziehung erzeugt werden.

3. Das Auflösungsmessverfahren nach Anspruch 1, wobei im Schritt zur Auflösungsmessung die verzerrten Testtafeln auf einem externen Anzeigegerät (20) ausgegeben werden.

4. Computergerät (30), das das Auflösungsmessverfahren nach einem der Ansprüche 1 bis 3 durchführt, wobei das Computergerät so ausgelegt ist, dass es mit einer Kamera (10) verbunden werden kann, die eine Verzerrung im Bildfeld verursacht, und so positioniert ist, dass es innerhalb seines Sichtfelds ein Bild einer Testtafel (50) aufnimmt.

5. System (1), umfassend:
- ein Computergerät (30) gemäß Anspruch 4,
- eine Kamera (10), die eine Verzerrung im fotografischen Sichtfeld erzeugt, und
- ein Anzeigegerät (20), wobei
das Anzeigegerät (20) die vom Computergerät (30) erzeugten verzerrten Testtafeln anzeigt und
das Computergerät (30) die Auflösungsmessung anhand der von der Kamera (10) erfassten, vom Anzeigegerät (20) angezeigten verzerrten Testtafeln durchführt.

6. Computerlesbares Medium, auf dem computerausführbare Anweisungen gespeichert sind, wobei die computerausführbaren Anweisungen ein Computergerät (30) veranlassen, das in einem der Ansprüche 1 bis 3 beschriebene Auflösungsmessverfahren durchzuführen, wenn die computerausführbaren Anweisungen von dem Computergerät (30) ausgeführt werden, das mit einer Kamera (10) verbunden ist, welche eine Verzerrung im fotografischen Sichtfeld erzeugt, und so positioniert ist, dass es innerhalb seines Sichtfelds ein Bild einer Testtafel (50) erfasst.

## Revendications

1. Procédé de mesure de résolution, qui est réalisé par un dispositif informatique (30), pour une caméra (10), comprenant des étapes pour :
la capture, par une caméra (10) qui provoque une distorsion dans un champ de vision, d'une image d'une première mire d'essai (50) de telle manière qu'elle inclut une partie arbitrairement sélectionnée où la résolution doit être mesurée ;
la génération, par interpolation, d'une carte de distorsion qui représente une relation de correspondance entre des coordonnées de pixels de la première mire d'essai (50) et des coordonnées des pixels de la première mire d'essai (50) dans l'image capturée ;
la génération, selon la relation de correspondance représentée par la carte de distorsion, d'une mire d'essai déformée qui est une image déformée d'une seconde mire d'essai qui est utilisée pour mesurer la résolution, au niveau d'une zone spécifique dans la première mire d'essai (50) dans l'image capturée ; et
la réalisation d'une mesure de résolution, selon un procédé de contraste au niveau d'une partie qui correspond à la zone spécifique, dans le champ de vision de la caméra (10), dans lequel les positions relatives de la caméra (10) et de la mire d'essai (50) sont inchangées pendant la période allant du moment de la génération de la carte de distorsion au moment de l'achèvement de la mesure de résolution, et dans lequel la mire d'essai déformée est capturée ;
dans lequel
la première mire d'essai (50) est une image à motif de grille ;
dans l'étape pour la génération de la carte de distorsion, des coordonnées des pixels de la première mire d'essai (50) dans l'image capturée, à l'exception de coordonnées de points de quadrillage respectifs de la première mire d'essai dans l'image capturée, sont calculées à partir des coordonnées des points de quadrillage respectifs par réalisation d'une interpolation ;
dans l'étape pour la génération de la mire d'essai déformée, un nombre multiple des mires d'essai déformées, qui sont des images déformées d'un nombre multiple des secondes mires d'essai correspondant à un nombre multiple des fréquences spatiales qui sont différentes les unes des autres, sont générées ; et
dans l'étape pour la réalisation de la mesure de résolution, une mesure de résolution est réalisée selon un procédé de contraste et dans un état où les multiples mires d'essai déformées pour le nombre multiple de fréquences spatiales qui diffèrent les unes des autres sont capturées avec répartition dans le temps sur la même partie correspondant à la zone spécifique, dans le champ de vision de la caméra (10).

2. Procédé de mesure de résolution selon la revendication 1, dans lequel, dans l'étape pour la génération de la mire d'essai déformée, le nombre multiple des secondes mires d'essai sans déformation sont dessinées dans une zone correspondant à celle de la première mire d'essai (50) dans l'image capturée, et les multiples mires d'essai déformées sont générées selon la relation de correspondance représentée par la carte de distorsion.

3. Procédé de mesure de résolution selon la revendication 1, dans lequel, dans l'étape pour la réalisation de la mesure de résolution, les multiples mires d'essai déformées sont sorties vers un dispositif d'affichage externe (20).

4. Dispositif informatique (30) qui réalise le procédé de mesure de résolution selon l'une des revendications 1-3, ledit dispositif informatique étant adapté pour être connecté à une caméra (10) provoquant une distorsion dans un champ de vision photographique, et positionné pour capturer, dans son angle de vue, une image d'une mire d'essai (50).

5. Système (1) comprenant
- un dispositif informatique (30) selon la revendication 4,
- une caméra (10) qui provoque une distorsion dans un champ de vision photographique, et
- un dispositif d'affichage (20), dans lequel
le dispositif d'affichage (20) affiche les multiples mires d'essai déformées générées par le dispositif informatique (30), et
le dispositif informatique (30) réalise l'étape pour la réalisation de la mesure de résolution par les multiples mires d'essai déformées affichées par le dispositif d'affichage (20) en train d'être capturées par la caméra (10).

6. Support lisible par ordinateur dans lequel des instructions exécutables par ordinateur sont stockées, dans lequel les instructions exécutables par ordinateur amènent un dispositif informatique (30) à réaliser le procédé de mesure de résolution selon l'une des revendications 1-3 lorsque les instructions exécutables par ordinateur sont exécutées par le dispositif informatique (30) qui est connecté à une caméra (10) provoquant une distorsion dans un champ de vision photographique, et positionné pour capturer, dans son angle de vue, une image d'une mire d'essai (50).
